# FASCICULE DE BREVET EUROPEEN

(11) **EP 2 372 958 B1**
(45) Date de publication et mention de la délivrance du brevet: **01.07.2020**
(21) Numéro de dépôt: 11160520.0
(22) Date de dépôt: 30.03.2011
(51) Int. Cl.: H04L 12/28, H04L 29/06, H04W 84/12

(54) **Procédé pour authentifier un terminal se connectant à un serveur d' accès à internet**
Authentifizierungsverfahren eines sich mit einem Internetzugriff Anbieter Endgeräts
Method for authenticating a terminal connecting with an internet server access

(30) Priorité: 30.03.2010 FR 1052347
(43) Date de publication de la demande: 05.10.2011
(73) Titulaire: SOCIETE FRANCAISE DU RADIO TELEPHONE (SFR), 75015 Paris (FR)
(72) Inventeur: Guindolet, Stéphane, 75012 PARIS (FR); Hamel, Alain, 92200 NEUILLY SUR SEINE (FR); Passien, Olivier, 78950 GAMBAIS (FR); Sultan, Alexis, 75020 Paris (FR)
(74) Mandataire: Ipside

(56) Documents cités:
- EP-A1- 1 624 639
- EP-A1- 1 959 629
- WO-A1-03/094438
- WO-A2-2007/114710
- US-A1- 2005 114 680
- LEU J-S ET AL: "RUNNING CELLULAR/PWLAN SERVICES: PRACTICAL CONSIDERATIONS FOR CELLULAR/PWLAN ARCHITECTURE SUPPORTING INTEROPERATOR ROAMING", IEEE COMMUNICATIONS MAGAZINE, IEEE SERVICE CENTER, PISCATAWAY, US, vol. 44, no. 2, 1 février 2006 (2006-02-01), pages 111-122, XP001240366, ISSN: 0163-6804, DOI: DOI:10.1109/MCOM.2006.1678118

## Description

L'invention concerne un procédé d'exécution d'un premier service au moyen d'un terminal qui est équipé d'une carte à circuit intégré et qui est en train d'exécuter un deuxième service. L'invention est par exemple utilisable pour l'accès à un réseau fixe depuis une situation mobile. Il s'agit notamment de la navigation sur un réseau de type Internet dans une situation nomade, c'est-à-dire avec un ordinateur portable situé dans un lieu public connecté à Internet via une liaison sans fil mise à disposition dans ce lieu.

### ARRIERE PLAN DE L'INVENTION

Les technologies numériques nomades se sont grandement développées ces dernières années. Ces technologies concernent des terminaux informatiques permettant de naviguer sur des réseaux de données, et plus particulièrement Internet, en dehors de tout raccordement filaire à ces réseaux. Ces terminaux sont par exemple des ordinateurs portables de type classique (par exemple PC) ou allégé (par exemple de type « Netbook », n'emportant qu'un minimum de ressources dédiées essentiellement à la navigation sur un réseau), ou bien encore des assistants personnels numériques et des téléphones mobiles, pourvus de moyens de raccordement sans fil, généralement par ondes radio, aux réseaux. Ces équipements disposent de capacité leur permettant d'utiliser des réseaux de différentes natures (GSM, 3G, Wi-Fi, Wimax...) .

En situation nomade, pour connecter son ordinateur portable à un réseau de type Internet, l'utilisateur doit placer son terminal à proximité d'une borne de liaison sans fil généralement reliée à un serveur d'accès relié à Internet directement ou via un réseau local.

De telles bornes d'accès sans fil sont par exemple des bornes de connexion sans fil mettant en œuvre la norme IEEE 802.11 communément identifiée sous la marque Wi-Fi, et les différents fournisseurs d'accès à Internet en ont équipé différents lieux tels que les gares, les aéroports ou les hôtels, ou bien encore des locaux d'habitation privés. Il peut également s'agit de bornes Wimax.

Lorsque l'utilisateur se connecte à ce serveur d'accès, le serveur d'accès ouvre une page d'identification demandant à l'utilisateur de saisir, depuis le terminal, un identifiant et un mot de passe qui sont transmis au serveur d'accès.

Une fois que l'identifiant et le mot de passe ont été reçus par le serveur d'accès, celui-ci exécute une routine de validation de l'identification en vérifiant si l'identifiant et le mot de passe correspondent à des valeurs mémorisées dans une liste regroupant les identifiants, les mots de passe et les droits de tous les utilisateurs ayant souscrit un abonnement autorisant l'accès audit serveur. En cas d'identification fructueuse, le serveur d'accès autorise le terminal à naviguer sur Internet et à bénéficier des services associés à son abonnement.

Cette identification permet donc de s'assurer que l'utilisateur est bien un utilisateur répertorié par un fournisseur d'accès à Internet, qui est abonné pour naviguer en situation nomade via les bornes sans fil mises à disposition par le fournisseur d'accès à Internet en question.

Ainsi, cette identification permet par exemple une facturation à l'usage, et en cas d'infraction à la législation en matière d'utilisation d'Internet, les actions de l'internaute sont enregistrées en association avec son identification, pour permettre le cas échéant la traçabilité de l'internaute.

En cas de vol du terminal, qui est par exemple un ordinateur portable, le voleur ne peut pas utiliser l'ordinateur pour naviguer sur Internet en situation mobile, puisqu'il ne possède pas le nom d'utilisateur ni le mot de passe, ceux-ci n'étant normalement pas mémorisés dans l'ordinateur. Il n'y a donc pas d'association entre le terminal et le couple identifiant/mot de passe.

En contrepartie, cette identification constitue une contrainte importante puisqu'elle oblige le détenteur du terminal à mémoriser un identifiant et un mot de passe attribués par le fournisseur d'accès. Le mot de passe, mais parfois aussi l'identifiant, ont une forme complexe rendant leur mémorisation difficile. Cette forme complexe vise, dans le cas du mot de passe, à compliquer sa découverte par un fraudeur. Les mots de passe sont ainsi généralement relativement longs (au moins huit caractères et de préférence plus, la longueur du mot de passe le rendant plus difficile à découvrir) et mêlent des caractères alphanumériques différents, lettres, chiffres et signes de ponctuation, en majuscules et minuscules.

Si l'on offre à l'utilisateur la possibilité de choisir ou modifier son mot de passe, l'expérience montre qu'il tend à utiliser un mot de passe simple, c'est-à-dire facile à mémoriser, mais également d'autant plus simple à pirater.

Un inconvénient de l'accès à Internet via une borne Wi-Fi est que de telles bornes ont une portée réduite et couvre un territoire relativement réduit, mais propose en contrepartie une capacité de connexion plus élevée.

Il a par ailleurs été envisagé d'utiliser le réseau cellulaire de téléphonie mobile pour communiquer des données et ainsi permettre à l'utilisateur d'un terminal ad hoc de se connecter à Internet en tout lieu couvert par ledit réseau, la couverture territoriale de ce réseau étant très importante. De nombreux terminaux informatiques portables incorporent ainsi un organe de connexion au réseau cellulaire mettant en œuvre le protocole de communication nommé 3G+. La connexion au réseau cellulaire est subordonnée à une authentification réussie de l'utilisateur au moyen d'une carte à circuit intégré incorporée au terminal ou reçue dans un lecteur relié audit terminal. Le circuit intégré renferme un code et un microcontrôleur permettant de vérifier qu'un code communiqué à la carte par l'utilisateur correspond au code mémorisé. Lorsque l'utilisateur veut se connecter à Internet via le réseau cellulaire, il saisit son code personnel pour qu'il soit communiqué à la carte qui va vérifier l'exactitude de celui-ci et, le cas échant, activer la carte à circuit intégré de manière à autoriser l'association au réseau cellulaire. Ce dernier autorise alors l'accès ou non au réseau de données (data) en fonction de l'identification faite de la carte SIM/USIM par les équipements du réseau cellulaire (HLR/AUC).

L'utilisation du réseau cellulaire présente néanmoins l'inconvénient de n'autoriser que des débits très inférieurs à ceux permis par une connexion Wi-Fi et d'être moins rentable qu'une connexion Wi-Fi pour un opérateur.

Le document EP 1 624 639 A1 concerne une authentification basée sur une carte SIM, et en particulier l'authentification basée sur une carte SIM sur des réseaux d'accès ne supportant pas le protocole de sécurité 802.1X.

### OBJET DE L'INVENTION

Le but de l'invention est de proposer une solution pour remédier à tout ou partie de ces inconvénients.

### RESUME DE L'INVENTION

L'objet de l'invention est défini dans sa portée et son étendue par les revendications associées à la présente description. L'invention porte sur un procédé d'exécution d'un premier service au cours d'une exécution d'un deuxième service au moyen d'un terminal informatique incorporant une carte à circuit intégré, l'exécution du premier service étant subordonnée à une identification réussie d'un utilisateur du terminal, l'exécution du deuxième service étant précédée d'une activation de la carte à circuit intégré et l'activation résultant d'une authentification réussie de l'utilisateur, le procédé comprenant l'étape de récupérer au moins une donnée accessible au moyen de la carte à circuit intégré activée et l'étape d'utiliser ladite donnée pour l'identification préalable à l'exécution du premier service.

Ainsi, c'est l'activation de la carte à circuit intégré par l'utilisateur, réalisée dans le cadre de l'exécution du deuxième service, qui permet d'accéder à la donnée d'identification nécessaire à l'opération d'identification préalable à l'exécution du premier service. La sécurité d'accès au premier service est donc assurée du fait de l'authentification qui a été réalisée préalablement au deuxième service et qui est nécessaire pour accéder à la donnée d'identification. La phase d'identification préalable à l'exécution du premier service est donc transparente pour l'utilisateur. L'utilisateur n'intervenant pas dans l'opération d'identification, une donnée d'identification complexe peut être utilisée.

Avantageusement, une fonction de traitement est appliquée à au moins la donnée d'identification préalablement à l'identification.

Ceci permet de transformer la donnée d'identification de manière à former un identifiant dans un format particulier et/ou un mot de passe complexe.

De préférence, le premier service est une connexion sans fil à un serveur d'accès à Internet via un point d'accès de type Wi-Fi d'un réseau de communication fixe, le serveur d'accès collectant auprès du terminal la donnée d'identification pour la vérifier et, avantageusement, le deuxième service est une connexion à un réseau de téléphonie mobile et la carte à circuit intégré est une carte de type SIM associée à un identifiant téléphonique, l'authentification préalable à l'exécution du deuxième service consistant en une vérification de correspondance entre un code mémorisé dans la carte à circuit intégré et un code saisi par l'utilisateur sur une interface d'entrée du terminal.

Avec cette solution, l'utilisateur n'a à saisir ni identifiant ni mot de passe pour connecter son terminal en mode nomade à un point d'accès à un réseau fixe. Seule la saisie initiale du code de la carte SIM est nécessaire. Les différentes phases d'authentification sont ainsi transparentes pour l'utilisateur et elles permettent de conserver un mot de passe complexe, c'est-à-dire difficile à pirater.

L'invention concerne également un procédé tel que défini ci-dessus, dans lequel l'identification préalable à la connexion Internet requiert deux données d'identification à savoir un identifiant Wi-Fi et un mot de passe et le procédé comprend, pendant la connexion au réseau de téléphonie mobile, les étapes de :
- détecter un point d'accès de type Wi-Fi,
- connecter le terminal à un serveur téléphonique dédié, via le réseau de téléphonie mobile, pour que le serveur téléphonique dédié renvoie une donnée d'identification téléphonique ou un élément bijectif d'une donnée d'identification téléphonique,
- collecter la donnée additionnelle,
- élaborer l'identifiant Wi-Fi à partir de la donnée d'identification téléphonique,
- calculer le mot de passe à partir d'une fonction prédéterminée de traitement appliquée à la donnée d'identification téléphonique et à la donnée additionnelle,
- se connecter au serveur d'accès à Internet et transmettre l'identifiant Wi-Fi et le mot de passe.

La donnée additionnelle est associée à la carte à circuit intégré et protégée par la saisie du code. La donnée additionnelle est par exemple contenue dans un champ de la carte à circuit intégré. Ce mode de réalisation est particulièrement bien adapté à une utilisation en télécommunication nomade. En effet, il est ainsi possible de passer, sans intervention de l'utilisateur, d'un échange de données via le réseau de téléphonie mobile à un échange de données via le réseau Internet. Ceci permet à l'utilisateur de bénéficier d'un débit plus important à moindre coût et limite les risques d'engorgement du réseau de téléphonie mobile.

De préférence, alternativement ou cumulativement :
- la donnée d'identification téléphonique est un identifiant téléphonique carte à circuit intégré et, avantageusement, le terminal envoie un message de type SMS au serveur téléphonique dédié qui lui renvoie un message contenant l'identifiant téléphonique de la carte à circuit intégré,
- la donnée additionnelle est un numéro de série de la carte à circuit intégré.

Ces données peuvent être récupérées facilement après activation de la carte à circuit intégré. La donnée d'identification téléphonique est par exemple un identifiant téléphonique qui, dans le cadre d'un réseau mobile cellulaire, est associé de façon bijective à la carte à circuit intégré. Le numéro de série est unique.

Avantageusement, la fonction prédéterminée de traitement est appliquée également à au moins l'un des éléments suivants :
- une variable temporelle telle que la date ou l'heure, l'identification par le serveur d'accès à Internet étant précédée d'une synchronisation du terminal avec le serveur d'accès à Internet,
- une clé alphanumérique incorporée dans un programme du terminal et / ou de la carte à circuit intégré,
- une donnée de géolocalisation déterminée par le terminal, le serveur d'accès bénéficiant d'une information de localisation du terminal par la localisation du point d'accès ou via le réseau téléphonique,
- une identification du point d'accès.
- une identification de la cellule du réseau cellulaire mobile utilisé.

Ceci permet de rendre le mot de passe variable selon une échelle de temps fixe ou aléatoire en fonction de l'élément utilisé.

### BREVE DESCRIPTION DES DESSINS

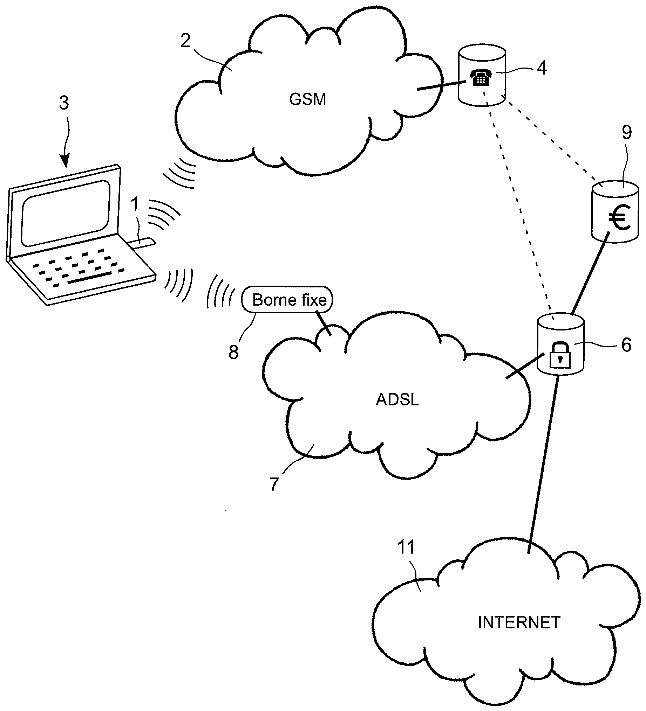

La figure unique est une représentation schématique d'un ensemble de moyens avec lesquels le procédé selon l'invention est mis en œuvre.

### DESCRIPTION DETAILLEE DE L'INVENTION

L'invention est ici décrite comme une application aux télécommunications mais n'est absolument pas limitée à ce seul domaine.

L'invention concerne donc un procédé d'exécution d'un premier service au moyen d'un terminal qui est équipé d'une carte à circuit intégré et qui est en train d'exécuter un deuxième service.

Le premier service est une connexion sans fil à un serveur d'accès à Internet via un point d'accès de type Wi-Fi d'un réseau de communication fixe et le deuxième service est une connexion à un réseau de téléphonie mobile.

Dans cette application particulière, l'idée à la base de l'invention est d'utiliser une carte à circuit intégré comportant une application SIM (Subscriber Identity Module signifiant module d'identité de l'abonné) ou USIM (Universal Subscriber Identity Module signifiant module universel d'identité de l'abonné), normalement utilisée pour l'accès au réseau de téléphonie mobile, pour assurer, de manière automatisée, l'identification préalable à l'accès au réseau fixe, à partir de données, associées à cette carte SIM, que l'utilisateur n'a pas à saisir à chaque identification.

La carte SIM et le lecteur de carte SIM, peuvent être intégrés à un autre support physique permettant un interfaçage plus facile avec ledit terminal. Un exemple de ce type de support non limitatif de l'invention est une clé USB (Universal Serial Bus signifiant bus universel série), repérée par 1 dans la figure, comportant en outre des moyens de communication avec un réseau téléphonique mobile et plus particulièrement un réseau cellulaire tel qu'un réseau GSM ou analogue repéré par 2, avec lequel il communique sans fil. Un tel réseau mobile est en particulier capable de maintenir une communication avec un terminal téléphonique se déplaçant géographiquement dans ce réseau, pour autant qu'il reste à portée successivement de différentes bornes d'accès (sont ainsi désignés les émetteurs-récepteurs dont la couverture territoriale définit les cellules) de ce réseau mobile.

La clé USB est avantageusement une clé de type 3G+ (3ème génération de téléphonie mobile utilisant le protocole HSDPA pour « High Speed Downlink Packet Access »), qui se branche à un ordinateur portable 3, ou terminal, via un port USB. Une fois branchée au port USB, une telle clé 1 permet d'échanger des données sur le réseau téléphonique et notamment des messages de texte de type SMS (Short Message Service signifiant service de messages courts), avec un serveur téléphonique 4 qui est en fait joignable via un numéro de téléphone.

L'ordinateur portable 3 peut aussi être équipé d'un lecteur de carte SIM et de moyens de communication avec un réseau téléphonique mobile, tel qu'un réseau 3G+, qui sont directement intégrés à cet ordinateur et offrent les mêmes fonctionnalités.

Dans l'application ici décrite, l'utilisateur commence par activer sa carte SIM pour échanger des données avec son ordinateur 3 via le réseau de téléphonie mobile.

Cette activation est réalisée en lançant un programme d'authentification qui est exécuté par l'ordinateur 3 et qui demande à l'utilisateur de saisir le mot de passe (dénommé code PIN dans la norme ETSI : Personnal Identification Number) qui lui a été communiqué à la remise de la carte SIM (ou qu'il a modifié par la suite).

Ce mot de passe est transmis à la carte SIM qui exécute une application de vérification du mot de passe. Si le mot de passe est correct, la carte SIM est activée, cette activation connecte alors l'équipement au réseau de téléphonie mobile et l'utilisateur peut échanger des données sur le réseau de téléphonie mobile.

En parallèle, est exécuté sur l'ordinateur 3 une application informatique de détection des points d'accès Wi-Fi.

Lorsqu'un tel point d'accès est détecté, l'application informatique en question prépare les données nécessaires à une identification auprès d'un serveur d'accès à Internet 6.

Conformément à l'invention, l'identification est assurée au moyen de données, associées à la carte SIM ou accessibles une fois la carte SIM activée, de manière à éviter à l'utilisateur de devoir saisir des données telles qu'identifiant et mot de passe, à chaque fois qu'il se connecte au réseau fixe lorsqu'il est en situation nomade.

Concrètement, l'application informatique permet de lire des données inscrites dans la carte SIM, comme par exemple le numéro d'identification IMSI (International Mobile Subscriber Identity signifiant identité internationale de l'abonné mobile) de la carte SIM qui est inscrit, c'est-à-dire mémorisé, directement dans cette carte.

Cette application est prévue pour commander le lecteur de carte SIM afin de lire le numéro IMSI inscrit dans cette carte et pour commander les moyens de communication afin d'émettre un message texte de type SMS à destination du serveur téléphonique 4 relié au réseau de téléphonie mobile.

Ce message de texte est émis par une voie de communication ou liaison empruntant le réseau cellulaire pour téléphones mobiles (auquel la carte SIM de l'utilisateur a été associée et autorisée à utiliser le service SMS) qui établit une liaison GSM ou 3G entre le terminal 3 et le serveur téléphonique 4 qui est identifié dans ce réseau mobile 2 par un numéro de téléphone.

Le serveur téléphonique 4 est agencé pour envoyer et recevoir des messages de texte SMS et le numéro de téléphone de ce serveur téléphonique 4 est mémorisé dans l'application tournant sur l'ordinateur 3.

Lorsque ce message de texte est reçu par le serveur téléphonique 4, ce serveur téléphonique 4 détecte le numéro de téléphone ou identifiant téléphonique de l'émetteur du message et adresse à la ligne téléphonique associée à la carte SIM, un message de texte SMS contenant l'identifiant téléphonique ou MSISDN (« Mobile Subscriber Integrated Services Digital Network Number » ou numéro d'abonné mobile à un réseau numérique à intégration de services) utilisé par la carte SIM pour l'envoi du premier message.

Le second message de texte envoyé en réponse contient dans son corps ledit identifiant téléphonique. Lorsque le second message de texte, issu du serveur téléphonique, est reçu par l'unité de communication 1, l'application informatique vérifie que l'émetteur du message de texte est bien le serveur dont le numéro a été enregistré dans ladite application et, le cas échéant, ledit identifiant téléphonique est récupéré par l'application informatique exécutée sur l'ordinateur 3.

L'application est alors commandée pour, d'une part, élaborer un identifiant Internet et, d'autre part, calculer un code ou mot de passe.

L'identifiant Internet peut, par exemple, être construit sous la forme d'une adresse de courriel de type :
*[identifiant téléphonique]@[site Internet d'un opérateur] .*

Le code est calculé en appliquant une fonction de traitement prédéterminée, qui est une fonction logique ou mathématique telle qu'une fonction de type Hash, aux trois variables que constituent l'identifiant téléphonique qui a été fourni par le serveur téléphonique 4, le numéro d'identification IMSI de la carte SIM contenue dans la clé 1 et une clé alphanumérique propre à l'application qui est mémorisée dans l'ordinateur 3 avec cette application.

Dans ce contexte, les données d'authentification que sont l'identifiant Internet et le code ainsi calculé constituent respectivement un identifiant et un mot de passe qui sont transmis conjointement à un serveur d'accès 6, depuis le terminal 3. Le serveur d'accès 6 est un serveur du type communément dénommé RADIUS (de l'anglais « Remote Authentication Dial-In User Service » désignant un service d'authentification à distance d'utilisateur se connectant).

Cette transmission est assurée au moyen d'un réseau fixe tel qu'un réseau ADSL 7, auquel le serveur d'accès 6 est relié, le terminal 3 communiquant avec ce réseau ADSL 7 par l'intermédiaire d'une borne d'accès fixe 8 reliée à ce réseau fixe et avec laquelle l'ordinateur portable 3 communique par liaison sans fil de type Wi-Fi. Un tel réseau fixe, est capable de maintenir une communication avec le terminal pour autant qu'il occupe une position sensiblement fixe, c'est-à-dire s'il est toujours à portée de la borne d'accès via laquelle il s'est initialement connecté.

D'une manière générale, une liaison de type Wi-Fi est une liaison sans fil utilisable pour communiquer avec un réseau fixe comportant une borne appropriée. Le terme Wi-Fi correspond à une marque déposée qui est associée aux moyens mettant en œuvre des liaisons sans fil conformes aux normes du groupe de normes IEEE 802.11.

A réception des données d'identification, le serveur d'accès 6 vérifie l'exactitude de l'identifiant Internet et du mot de passe. Si l'identifiant Internet et le mot de passe sont corrects, l'identification est réussie et l'utilisateur est autorisé à naviguer sur Internet.

Selon une caractéristique avantageuse de l'invention, le serveur d'accès 6 est relié à une base de données regroupant pour tous les abonnés à un fournisseur d'accès Internet et/ou opérateur de téléphonie, entre autres, les données d'identification téléphonique et Internet, le code d'accès Internet, les droits associés, de telle manière que le serveur d'accès 6 puisse être mis à jour rapidement en cas de modification des droits attachés aux abonnés. Le serveur d'accès 6 peut également être relié, d'une part, à une base de données regroupant les données Internet (identité du titulaire, identifiant Internet, droits, historique) et, d'autre part, à une base de données regroupant les données téléphoniques (identité du titulaire, identifiant téléphonique MSISDN, numéro IMSI, historique).

Selon une variante, le serveur d'accès 6 extrait de l'identifiant Internet l'identifiant téléphonique et interroge le serveur téléphonique 4 sur la base de celui-ci.

Cette interrogation vise à récupérer les éléments permettant de recalculer le code lorsque le code n'est pas enregistré tel quel dans la mémoire du serveur d'accès 6.

Ceci est particulièrement intéressant lorsque ledit code a été calculé en utilisant un élément variable fourni à l'ordinateur 3 par le serveur 4 en même temps que l'identifiant téléphonique ou à la place de celui-ci. Cet élément variable peut être un nombre aléatoire ou une clé alphanumérique modifiée périodiquement.

A l'inverse, le serveur d'accès 6 pourrait fournir au serveur téléphonique 4 un élément variable ou non destiné à être communiqué par le serveur téléphonique 4 à un ordinateur 3 en même temps que ou à la place de l'identifiant téléphonique.

Ceci est également intéressant si la formule de traitement est périodiquement modifiée.

Dans ce cadre, le serveur d'accès 6 et le serveur téléphonique 4 communiquent par une voie de communication empruntant un réseau fixe.

Le serveur d'accès 6 doit détenir la fonction de traitement prédéterminée.

Le serveur d'accès 6 peut alors comparer la valeur qu'il a calculée avec le code qui lui a été adressé par le terminal 3. Dans le cas où la valeur calculée est identique au code qui a été transmis par le terminal 3, l'identification est réussie, de sorte que le serveur d'accès 6 autorise le terminal 3 à naviguer sur le réseau Internet 11 via la borne d'accès Wi-Fi 8.

Dans le cas où la valeur calculée diffère du code qui a été transmis par le terminal 3, l'authentification échoue, de sorte que le terminal 3 n'est pas autorisé à naviguer sur Internet via la borne Wi-Fi 8.

Comme on l'aura noté, l'identifiant téléphonique n'est pas nécessairement collecté via les moyens de communication équipant l'ordinateur à chaque tentative d'identification. Elle peut être collectée via les moyens de communication lors de la première tentative d'identification, et être automatiquement mémorisée dans l'ordinateur par l'application, en vue des authentifications ultérieures.

L'identifiant téléphonique peut aussi être préenregistré dans la clé 3G, voire être saisi manuellement par l'utilisateur avant ou lors d'une première identification.

En ce qui concerne le numéro d'IMSI inscrit dans la carte SIM, celui-ci est lu dans la carte SIM par l'application à chaque tentative d'identification. Ainsi, dans le cas où la carte SIM est portée par une clé 3G, l'identification ne peut être assurée depuis l'ordinateur seul, sans la clé 3G, puisqu'en outre, le code calculé par l'application n'est jamais enregistré dans l'ordinateur.

De plus, en cas de retrait de la clé 3G, l'application adresse au serveur d'accès 6 une requête en déconnexion.

L'invention permet de mettre en œuvre une identification entièrement automatisée et différents aspects de sa mise en œuvre peuvent être modulés pour accroître ou diminuer le niveau de sécurité vis-à-vis de l'authentification.

Toute référence associée à la carte SIM peut être utilisée pour la mise en œuvre du procédé de l'invention afin de constituer un identifiant Internet. Cette référence peut dans le mode de réalisation décrit être tout simplement un numéro de téléphone associé de manière permanente à cette carte SIM dans le réseau de téléphonie mobile. Ce numéro de téléphone peut alors rester mémorisé de manière permanente dans le terminal 3 une fois qu'il a été obtenu auprès du serveur téléphonique 4 lors d'une première identification.

Cette solution, présente un niveau de sécurité important tout en étant de mise en œuvre simple. En effet, dans l'architecture logique des cartes SIM telle qu'elle existe à ce jour, le numéro de téléphone associé à une carte SIM n'est pas inscrit dans cette carte SIM. C'est au contraire dans une ou plusieurs bases de données faisant partie d'un réseau de téléphonie mobile que sont enregistrés pour chaque carte SIM mise en circulation, son numéro d'IMSI et le numéro de téléphone qui lui est associé.

Dans une approche plus élaborée, cette référence peut être une valeur modifiée par un algorithme de façon régulière et automatisée, dans la base de données à laquelle accède le serveur téléphonique 4, afin d'accroître la sécurité. Dans ce cas, cette référence n'est pas mémorisée dans le terminal 3 et elle est au contraire demandée par les moyens de communication 1 du terminal 3, au serveur téléphonique 4 à chaque authentification.

Comme mentionné ci-dessus en variante, un serveur d'informations commerciales, repéré par 9, peut lui aussi interagir avec la base de données à laquelle accède le serveur téléphonique 4, par exemple pour supprimer les identifiants des cartes SIM dont les titulaires ont résilié leur abonnement et pour ajouter de nouveaux titulaires. De manière analogue, le serveur d'informations commerciales 9 peut également supprimer les identifiants des cartes SIM qui sont temporairement suspendus par exemple pour retard de paiement de leur abonnement.

Le serveur téléphonique 4 peut, quant à lui, être relié au serveur commercial 9 et au serveur d'accès 6. Dans ce cas, lorsque le serveur téléphonique est sollicité par les moyens de communication 1 du terminal 3 pour obtenir une référence, il calcule une référence qu'il adresse d'une part aux moyens 1 et d'autre part au serveur commercial 9 et au serveur d'accès 6 pour qu'elle soit associée à l'identifiant de carte SIM qui l'a initialement sollicité.

En ce qui concerne la clé alphanumérique qui est mémorisée dans l'application de connexion tournant sur le terminal 3 et qui est commune à toutes les applications de connexion du fournisseur, elle procure un niveau de sécurité supplémentaire. En cas de problème de sécurité significatif, il est possible de proposer aux utilisateurs de télécharger une nouvelle version de cette application de connexion dans laquelle est mémorisée une nouvelle clé, ce qui assure que seuls les terminaux 3 équipés de cette nouvelle application de connexion pourront être authentifiés. Il est en outre envisageable de prévoir des applications informatiques disposant de clés alphanumériques différentes en fonction de leurs lieux de commercialisation ou du lieu de résidence du titulaire des droits.

En ce qui concerne la fonction de traitement, elle peut également être choisie plus ou moins complexe en fonction du niveau de sécurité souhaité.

De manière additionnelle, cette fonction de traitement peut être scindée en plusieurs parties, ces différentes parties étant enregistrées dans des éléments distincts du système.

Ainsi, dans cette réalisation, la fonction de traitement peut être mémorisée en partie dans la clé 3G 1, en partie dans le terminal portable 3 et en partie dans la carte SIM présente dans le terminal ou la clé 3G 1. Lorsque la fonction de traitement doit être exécutée, l'application de connexion télécharge les différentes parties de cette fonction de traitement, pour pouvoir l'appliquer aux données à coder.

Cette fonction de traitement peut encore être prévue pour intégrer le temps parmi les conditions d'authentification, afin d'accroître la robustesse du procédé. Dans ce cas, on prévoit que la date et/ou l'heure constitue une variable supplémentaire de cette fonction de traitement, pour que le code calculé par cette fonction dépende du temps, en plus de dépendre de la référence associée à la carte SIM, de l'identifiant de la carte SIM et de la clé de l'application d'authentification.

Dans ces conditions, lors d'une authentification, le code calculé par la fonction de traitement ne permet de s'authentifier que pendant un intervalle de temps prédéterminé. Cette méthode nécessite que le serveur 6 et le terminal 3 sur lequel fonctionne la fonction de calcul du mot de passe soit interconnectés à un serveur de temps tiers permettant de synchroniser les horloges des différents équipements.

L'invention apporte notamment les avantages suivants.

L'invention permet une identification automatisée, de sorte que la commutation depuis une connexion mobile 3G vers une connexion fixe de type Wi-Fi peut être complètement transparente pour l'utilisateur, ce qui permet à un opérateur de télécommunications de bénéficier d'un délestage significatif de son réseau 3G, dès lors que son réseau fixe possède une quantité suffisante de bornes d'accès Wi-Fi.

Lorsque l'utilisateur souhaite connecter son appareil en mode nomade, il doit au maximum saisir un code pour déverrouiller la carte SIM afin de permettre l'accès aux données enregistrées dans cette carte SIM. Cela simplifie significativement sa tâche du fait que le code d'accès à la carte SIM comporte uniquement quatre caractères et est personnalisable.

En outre, l'utilisateur peut aussi faire le choix de ne pas requérir de code d'accès pour permettre la lecture des données de sa carte SIM, de sorte qu'il n'a alors besoin de ne saisir absolument aucun code lorsqu'il a besoin d'identifier son terminal.

Lorsque l'invention est mise en œuvre avec une clé 3G, elle offre à l'utilisateur la possibilité de naviguer sur Internet de façon nomade dans quasiment toutes les situations. En l'absence de borne sans fil de réseau fixe, l'utilisateur peut naviguer sur Internet via la liaison 3G empruntant un réseau téléphonique mobile, donc relativement coûteux. Mais dès lors que l'utilisateur est à portée d'une borne sans fil de réseau fixe, il peut l'utiliser de manière à réduire son coût de connexion à Internet.

Bien entendu, l'invention n'est pas limitée au mode de réalisation décrit mais englobe toute variante entrant dans le champ de l'invention telle que définie par les revendications.

En particulier, le premier service et le deuxième service peuvent ne pas concerner un accès à un réseau.

La carte SIM peut être utilisée à des fins d'authentification en dehors d'une connexion à un réseau de téléphonie mobile. Il en est de même d'une carte bancaire ou de tout autre carte ou système électronique assurant un processus d'authentification.

Bien que l'identifiant téléphonique ait été décrit comme étant récupéré via un envoi de message de type SMS, l'identifiant téléphonique peut être récupéré via un autre mode et par exemple par un flux de type WAP (de l'anglais « Wireless Application Protocol » ou protocole pour application sans fil). Le message peut être un message d'un autre type par exemple pour une mise en œuvre USSD ou signalisation GPRS/UMTS. Les messages peuvent être envoyés sans passer pas la carte SIM.

Les données utilisables pour former l'identifiant Internet et le mot de passe sont nombreuses et en aucun cas limitées à celles décrites.

Par exemple, la fonction prédéterminée de traitement peut être appliquée également à au moins l'un des éléments suivants :
- une variable temporelle telle que la date ou l'heure,
- une clé alphanumérique incorporée dans un programme du terminal et / ou de la carte à circuit intégré,
- une donnée de géolocalisation déterminée par le terminal,
- une identification du point d'accès,
- un identifiant de la cellule du réseau dans laquelle le terminal est détecté.

Dans le cas de l'utilisation d'une variable temporelle telle que la date ou l'heure, l'identification par le serveur d'accès à Internet est précédée d'une synchronisation du terminal avec le serveur d'accès à Internet de telle manière que le terminal et le serveur d'accès à Internet possèdent les mêmes informations d'horodatage.

Dans le cas de l'utilisation d'une donnée de géolocalisation déterminée par le terminal par exemple grâce à un module de positionnement par satellites de type GPS, le serveur d'accès doit disposer d'une information permettant de localiser le terminal. Cette information de localisation du terminal peut résulter de la localisation du point d'accès auquel s'est connecté le terminal (le serveur d'accès dispose alors d'une table mettant en relation l'identification de chaque point d'accès, nécessaire au routage des données sur le réseau et des données de localisation de chaque point d'accès). Il est possible également de localiser le terminal en fonction de la localisation des relais émetteurs-récepteurs captant les signaux téléphoniques émanant du terminal.

Le nombre de données utilisé pour former les données d'identification peut être différent du nombre mentionné ci-dessus. A titre d'exemple, à partir d'une seule donnée, il est possible de former autant de données d'identification que l'on dispose de formules de traitement différentes. Un identifiant et un mot de passe peuvent ainsi être formés à partir d'une seule et même donnée et de deux formules de traitement.

En outre, le nombre de données d'identification peut être différent de deux et comprendre par exemple un identifiant et deux mots de passe.

De préférence, la transmission, depuis le terminal 3 vers le serveur d'accès 6, des données d'identification est assurée selon un protocole de transmission cryptée. Ceci n'est toutefois pas indispensable notamment lorsque les données de connexion sont fréquemment changées.

Par carte à circuit intégré, on entend tout support pourvu d'un circuit intégré.

L'identifiant Internet peut avoir des formes différentes de celles décrites et peut faire l'objet d'un chiffrement ou tout autre traitement réalisé à des fins notamment sécuritaires ou de transmission.

En variante, l'étape de détection d'un point d'accès sans fil au réseau Internet peut être réalisée avant, pendant, après ou de manière synchrone avec la connexion au réseau téléphonique.

La donnée additionnelle peut être contenue dans la carte SIM ou accessible seulement après activation de ladite carte.

En variante, la carte à circuit intégré est reçue dans une unité amovible reliée au terminal, et le procédé comprend une étape d'interruption du deuxième service en cas de déconnexion de l'unité amovible.

## Revendications

1. Procédé pour authentifier un terminal (3) se connectant à un serveur d'accès à internet (6) via un point d'accès de type WiFi d'un réseau de communication fixe (7), avec une carte SIM associée à une unité de communication (1) avec un réseau téléphonique mobile, cette carte SIM et ces moyens étant intégrés ou reliés à ce terminal (3), dans lequel le serveur d'accès (6) collecte auprès du terminal (3) des données d'authentification qui sont établies au niveau de ce terminal (3) à partir notamment d'un identifiant mémorisé dans la carte SIM et d'une référence associée à cette carte SIM et préalablement reçue via une connexion au réseau de téléphonie mobile établie avec la carte SIM et l'unité de communication associée (1), et dans lequel le serveur d'accès (6) vérifie la validité des données d'authentification collectées pour authentifier le terminal (3) ; **caractérisé en ce que**
l'identifiant mémorisé dans la carte SIM ainsi que la référence associée à cette carte SIM sont mémorisés conjointement dans une base de données accessible par un serveur téléphonique (4) auquel est relié le serveur d'accès (6), dans lequel les données d'authentification comprennent la référence associée à la carte SIM ainsi qu'un code, et dans lequel le serveur d'accès (6) :
- collecte auprès du terminal (3) la référence associée à la carte SIM ainsi que le code, ce code étant calculé dans le terminal (3) en appliquant une fonction de traitement prédéterminée à au moins l'identifiant mémorisé dans la carte SIM ;
- collecte auprès du serveur téléphonique (4) l'identifiant qui est mémorisé dans la base de données en y étant associé à la référence qui a été collectée auprès du terminal (3), détermine une valeur en appliquant la fonction de traitement prédéterminée à au moins l'identifiant qui a été collecté auprès du serveur téléphonique (4) ;
- authentifie le terminal (3) lorsque la valeur calculée est identique au code transmis par le terminal (3) ;
la fonction prédéterminée de traitement est appliquée également à au moins l'un des éléments suivants :
- une variable temporelle telle que la date ou l'heure, l'identification par le serveur d'accès à Internet étant précédée d'une synchronisation du terminal avec le serveur d'accès à Internet,
- une clé alphanumérique incorporée dans un programme du terminal et / ou de la carte SIM,
- une donnée de géolocalisation déterminée par le terminal, le serveur d'accès bénéficiant d'une information de localisation du terminal par la localisation du point d'accès ou via le réseau téléphonique,
- une identification du point d'accès
- une identification de la cellule du réseau cellulaire mobile utilisé ;
la fonction de traitement est scindée en plusieurs parties qui sont enregistrées sur des supports physiques distincts parmi le terminal (3), une unité de communication (1) associée au terminal, la carte SIM et/ou un ou des serveurs (4, 6) accessibles depuis le terminal (3).

2. Procédé selon la revendication 1, dans lequel la référence associée à la carte SIM est un identifiant téléphonique de cette carte SIM dans le réseau de téléphonie mobile.

3. Procédé selon l'une quelconque des revendications précédentes, dans lequel le terminal envoie un message de type SMS au serveur téléphonique dédié qui lui renvoie un message contenant la référence associée à la carte SIM.

4. Procédé selon l'une quelconque des revendications précédentes, dans lequel le code calculé dans le terminal (3) et le code calculé dans le serveur d'accès (6) sont établis en appliquant la fonction de traitement prédéterminée aux trois données que constituent la référence associée à la carte SIM l'identifiant de la carte SIM et la clé alphanumérique mémorisée dans le terminal.

5. Procédé selon l'une quelconque des revendications précédentes, dans lequel la fonction de traitement est également appliquée à une valeur de type temporel telle que la date et/ou l'heure pour n'autoriser l'authentification que durant un intervalle de temps prédéterminé.

6. Procédé selon l'une quelconque des revendications précédentes, dans lequel la transmission, depuis le terminal (3) vers le serveur d'accès (6), des données d'authentification est assurée selon un protocole de transmission cryptée.

7. Procédé selon l'une quelconque des revendications précédentes, dans lequel la carte SIM est reçue dans une unité amovible reliée au terminal, et le procédé comprend une étape d'interruption de la connexion au point d'accès WiFi en cas de déconnexion de l'unité amovible.

## Patentansprüche

1. Verfahren zum Authentifizieren eines Endgeräts (3), das sich mit einem Interzugangsserver (6) über einen Zugangspunkt vom Typ WLAN eines stationären Kommunikationsnetzes (7) verbindet, mit einer SIM-Karte, die einer Kommunikationseinheit (1) mit einem Mobilfunknetz zugewiesen ist, wobei diese SIM-Karte und diese Mittel in dieses Endgerät (3) eingebaut oder damit verbunden sind, wobei der Zugangsserver (6) bei dem Endgerät (3) Authentifizierungsdaten erfasst, die auf Höhe dieses Endgeräts (3) ausgehend insbesondere von einer Kennung, die in der SIM-Karte gespeichert ist, und von einer Referenz erstellt werden, die dieser SIM-Karte zugewiesen ist und die zuvor über eine Verbindung mit dem Mobilfunknetz empfangen wurde, die mit der SIM-Karte und der zugewiesenen Kommunikationseinheit (1) aufgebaut wurde, und wobei der Zugangsserver (6) die Gültigkeit der erfassten Authentifizierungsdaten verifiziert, um das Endgerät (3) zu authentifizieren; **dadurch gekennzeichnet, dass**
die Kennung, die in der SIM-Karte gespeichert ist, sowie die Referenz, die dieser SIM-Karte zugewiesen ist, gemeinsam in einer Datenbank gespeichert werden, die für einen Telefonserver (4) zugänglich ist, mit dem der Zugangsserver (6) verbunden ist, wobei die Authentifizierungsdaten die Referenz, die der SIM-Karte zugewiesen ist, sowie einen Code umfassen, und wobei der Zugangsserver (6):
- bei dem Endgerät (3) die Referenz, die der SIM-Karte zugewiesen ist, sowie den Code erfasst, wobei der Code in dem Endgerät (3) berechnet wird, indem eine vorbestimmte Verarbeitungsfunktion mindestens auf die Kennung angewendet wird, die in der SIM-Karte gespeichert ist;
- bei dem Telefonserver (4) die Kennung erfasst, die in der Datenbank gespeichert ist, indem sie dort der Referenz zugewiesen wird, die bei dem Endgerät (3) erfasst wurde, einen Wert bestimmt, indem die vorbestimmte Verarbeitungsfunktion mindestens auf die Kennung angewendet wird, die bei dem Telefonserver (4) erfasst wurde;
- das Endgerät (3) authentifiziert, wenn der berechnete Wert identisch ist mit dem Code, der von dem Endgerät (3) gesendet wird;
die vorbestimmte Verarbeitungsfunktion ebenfalls auf mindestens eines der folgenden Elemente angewendet wird:
- eine Zeitvariable, wie etwa Datum oder Uhrzeit, wobei der Identifikation durch den Internetzugangsserver eine Synchronisation des Endgeräts mit dem Internetzugangsserver vorausgeht,
- einen alphanumerischen Schlüssel, der in ein Programm des Endgeräts und/oder der SIM-Karte eingebaut ist,
- eine Geolokalisierungsangabe, die von dem Endgerät bestimmt wird, wobei der Zugangsserver eine Lokalisierungsinformation des Endgeräts bezieht durch die Lokalisierung des Zugangspunkts oder über das Telefonnetz,
- eine Identifikation des Zugangspunkts,
- eine Identifikation der Zelle des verwendeten zellulären Mobilfunknetzes;
die Verarbeitungsfunktion unterteilt ist in mehrere Teile, die auf unterschiedlichen physischen Datenträgern gespeichert sind, darunter das Endgerät (3), eine Kommunikationseinheit (1), die dem Endgerät zugewiesen ist, die SIM-Karte und/oder ein oder mehrere Server (4, 6), die von dem Endgerät (3) aus zugänglich sind.

2. Verfahren nach Anspruch 1, wobei die Referenz, die der SIM-Karte zugewiesen ist, eine Telefonkennung dieser SIM-Karte in dem Mobilfunknetz ist.

3. Verfahren nach einem der vorstehenden Ansprüche, wobei das Endgerät eine Nachricht vom Typ SMS an den entsprechenden Telefonserver sendet, der ihm eine Nachricht zurücksendet, welche die Referenz enthält, die der SIM-Karte zugewiesen ist.

4. Verfahren nach einem der vorstehenden Ansprüche, wobei der Code, der in dem Endgerät (3) berechnet wird, und der Code, der in dem Zugangsserver (6) berechnet wird, erstellt werden, indem die vorbestimmte Verarbeitungsfunktion auf die drei Daten angewendet wird, welche die Referenz, die der SIM-Karte zugewiesen ist, die Kennung der SIM-Karte und der alphanumerische Schlüssel, der in dem Endgerät gespeichert ist, bilden.

5. Verfahren nach einem der vorstehenden Ansprüche, wobei die Verarbeitungsfunktion ebenfalls auf einen Wert vom Typ Zeitwert, wie etwa Datum und/oder Uhrzeit, angewendet wird, um die Authentifizierung nur während einer vorbestimmten Zeitspanne zuzulassen.

6. Verfahren nach einem der vorstehenden Ansprüche, wobei das Senden von Authentifizierungsdaten, von dem Endgerät (3) an den Zugangsserver (6), gemäß einem verschlüsselten Übertragungsprotokoll sichergestellt wird.

7. Verfahren nach einem der vorstehenden Ansprüche, wobei die SIM-Karte in einer abnehmbaren Einheit aufgenommen wird, die mit dem Endgerät verbunden ist, und das Verfahren einen Schritt des Unterbrechens der Verbindung zum WLAN-Zugangspunkt im Fall einer Trennung der abnehmbaren Einheit umfasst.

## Claims

1. Method for authenticating a terminal (3) connecting to an internet access server (6) via an access point of the Wi-Fi type of a fixed communication network (7), with a SIM card associated with a unit (1) for communication with a mobile telephone network, this SIM card and these means being integrated into or connected to this terminal (3), wherein the access server (6) collects from the terminal (3) authentication data that is established at this terminal (3) on the basis in particular of an identifier memorised in the SIM card and a reference associated with this SIM card and previously received via a connection to the mobile telephony network established with the SIM card and the associated communication unit (1), and wherein the access server (6) verifies the validity of the authentication data collected to authenticate the terminal (3); **characterised in that** the identifier memorised in the SIM card as well as the reference associated with this SIM card are memorised together in a database accessible by a telephone server (4) to which the access server (6) is connected, wherein the authentication data comprises the reference associated with the SIM card as well as a code, and wherein the access server (6):
- collects from the terminal (3) the reference associated with the SIM card as well as the code, this code being calculated in the terminal (3) by applying a predetermined processing function to at least the identifier memorised in the SIM card;
- collects from the telephone server (4) the identifier that is memorised in the database while being associated therein with the reference that was collected from the terminal (3), determines a value by applying the predetermined processing function to at least the identifier that was collected from the telephone server (4) ;
- authenticates the terminal (3) when the value calculated is identical to the code transmitted by the terminal (3);
the predetermined processing function is also applied to at least one of the following elements:
- a time variable such as the date or the time, the identification by the internet access server being preceded by a synchronisation of the terminal with the internet access server,
- an alphanumeric key incorporated into a programme of the terminal and/or of the SIM card,
- a piece of geolocation data determined by the terminal, the access server having a piece of information on location of the terminal by the location of the access point or via the telephone network,
- an identification of the access point,
- an identification of the cell of the mobile cellular network used;
the processing function is divided into a plurality of parts that are recorded on distinct physical media out of the terminal (3), a communication unit (1) associated with the terminal, the SIM card and/or one or more servers (4, 6) accessible from the terminal (3).

2. Method according to claim 1, wherein the reference associated with the SIM card is a telephone identifier of this SIM card in the mobile telephony network.

3. Method according to any one of the previous claims, wherein the terminal sends a message of the SMS type to the dedicated telephone server which sends back to it a message containing the reference associated with the SIM card.

4. Method according to any one of the previous claims, wherein the code calculated in the terminal (3) and the code calculated in the access server (6) are established by applying the predetermined processing function to the three pieces of data formed by the reference associated with the SIM card, the identifier of the SIM card and the alphanumeric key memorised in the terminal.

5. Method according to any one of the previous claims, wherein the processing function is also applied to a value of the time type such as the date and/or the time to only allow the authentication during a predetermined time interval.

6. Method according to any one of the previous claims, wherein the transmission, from the terminal (3) towards the access server (6), of the authentication data is ensured according to a protocol for encrypted transmission.

7. Method according to any one of the previous claims, wherein the SIM card is received in a removable unit connected to the terminal, and the method comprises a step of interruption of the connection to the Wi-Fi access point in the case of disconnection of the removable unit.
